Europäisches Patentamt

European Patent Office

Office européen des brevets

(11) Veröffentlichungsnummer: **0 459 002 A1**

## (12) EUROPÄISCHE PATENTANMELDUNG

(21) Anmeldenummer: **90110445.5**

(51) Int. Cl.5: **B65G 69/28**

(22) Anmeldetag: **01.06.90**

(43) Veröffentlichungstag der Anmeldung:
**04.12.91 Patentblatt  91/49**

(84) Benannte Vertragsstaaten:
**AT BE CH DE DK ES FR GB GR IT LI LU NL SE**

(71) Anmelder: **VAN WIJK NEDERLAND B.V.**
**Loodsweg 1**
**NL-8243 PH Lelystad(NL)**

(72) Erfinder: **Pereira das Dores, Antonio**
**Archipel 36-09**
**NL-8224 HL Lelystadt(NL)**

(74) Vertreter: **Wolff, Hans Joachim, Dr.jur.**
**Dipl.-Chem. et al**
**Beil, Wolff & Beil Rechtsanwälte Postfach 80**
**01 40 Adelonstrasse 58**
**W-6230 Frankfurt am Main 80(DE)**

(54) **Überfahrbrücke für Rampen mit um eine rampenseitige Achse verschwenkbarer Brückenplatte und seitlichen Fussschutzblechen.**

(57) Die Erfindung betrifft eine Überfahrbrücke für Rampen mit einer um eine rampenseitige Achse (2) verschwenkbarer Brückenplatte und seitlichen Fußschutzblechen (5), die mittels eines scherenartigen Hebelmechanismus (8,9) sicher aussteifbar sind und dadurch den gesamten Hubbereich der Brücke abdecken und auch für größere zu überbrückende Höhenunterschiede geeignet sind.

FIGUR 1

EP 0 459 002 A1

Die Erfindung betrifft eine Überfahrbrücke für Rampen mit einer an ihrem rampenseitigen Ende um eine waagrechte Achse verschwenkbaren Brückenplatte, die eine ein- und ausschwenkbare bzw. ein- und ausfahrbare Verlängerung zum Auflegen auf die zu be- bzw. entladende Plattform und seitliche Fußschutzbleche aufweist.

Derartige Überfahrbrücken sind bekannt. Die bekannten Überfahrbrücken sind mit hängenden, sich beim Senken in die Brückenplattform schiebenden oder mit sich in die Brücke drehenden Fußschutzblechen versehen.

Weisen die zu be- und entladenden Fahrzeuge große Höhenunterschiede auf - beispielsweise haben sogenannte Jumbofahrzeuge eine Bodenhöhe der Ladefläche über Straßenniveau von ca. 600 mm und Container eine solche von ca. 1600 mm -, so muß die Überfahrbrücke entsprechend lang sein und auch sehr hohe seitliche Fußschutzbleche haben, um im gesamten Arbeitsbereich der Überfahrbrücke eventuelle Gefahrenstellen an den Längsseiten während des Auf- und Abfahrens zu vermeiden. Für diesen Fall sind einschiebbare Fußschutzbleche bekannt, die den Nachteil haben, daß sie aus 3 oder mehr Segmenten bestehen müssen, um den gesamten Arbeitsbereich zu überdecken, was für die Sicherheit nicht optimal ist. Eine andere Lösung sind in die Brücke sich drehende Fußschutzbleche, die entweder nur herabhängen, also eine rein optische Lösung darstellen, da sie einfach von der Seite wegzudrücken sind, oder hängende Bleche, die zusätzlich an der Rückseite des Fußschutzes einen Stangenmechanismus besitzen, der diese Fußschutzbleche ausstreift und festhält. Dieses letztgenannte System erweist sich schon bei Standardladehöhen als unzulänglich, weil bereits bei geringer horizontaler Krafteinwirkung diese Versteifung versagt.

Ziel der Erfindung ist es, Überfahrbrücken, die insbesondere große Höhenunterschiede überbrücken können, mit über die gesamte Länge wirkenden und auf einfache Weise aussteifbaren Fußschutzblechen zu versehen, die den oberen Arbeitsbereich der Überfahrbrücken sichern und auch größere seitliche Kräfte ohne Probleme auffangen, wobei deren Herstellungskosten niedrig sind.

Dieses Ziel wird dadurch erreicht, daß man an den Außenseiten der Plattform (3) je ein oder vorzugsweise mehrere Schutzbleche (5) befestigt, deren Höhe maximal der Bauhöhe H der Grube bzw. des Brückenrahmens und deren Länge derjenigen der Plattform (3) entspricht. Dadurch wird der gesamte Bewegungsbereich der Plattform nach oben abgedeckt. Entscheidend für die Lösung der gestellten Aufgabe ist weiterhin die Aussteifung der Schutzbleche (5) sowie deren Stellung bei minimaler bzw. maximaler Position der Plattform (3). Diese Aussteifung der Schutzbleche (5) erfolgt durch einen scherenartigen Hebelmechanismus, der die Schutzbleche (5) beim Anheben der Plattform (3) mit nach oben bewegt und diese im gesamten Hubbereich aussteift. Bei Bewegung der Plattform (3) nach unten werden die Schutzbleche (5) bis zum Boden der Grube bzw. des Rahmens (16) herabgeführt, während die Plattform (3) sich soweit senkt, bis sie auf Widerlager (15) ruht.

Ein Ausführungsbeispiel der Erfindung wird anhand der Abbildungen 1-3 näher erläutert.

Dabei zeigt

Fig. 1 einen Längsschnitt durch eine Überladebrücke im obersten und im untersten Stand,
Fig. 2 eine vordere Ansicht einer Seite der Überladebrücke im untersten Stand,
Fig. 3 eine vordere Ansicht einer Seite der Überladebrücke im obersten Stand.

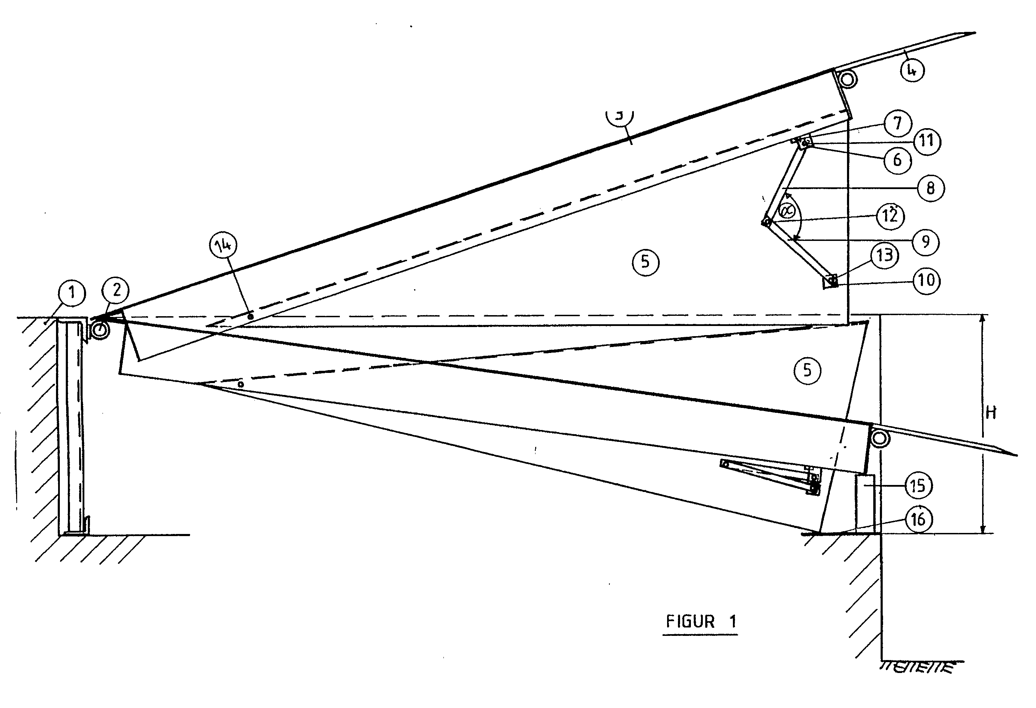

Fig. 1 zeigt die um die Achse (2) an der Rampe (1) schwenkbare Plattform (3) mit einer ein- oder ausschwenkbaren bzw. ein- oder ausfahrbaren Verlängerung (4). Gemäß dieser Ausführung ist an den beiden Außenseiten jeweils 1 Fußschutzblech (5) angebracht, vorzugsweise können jedoch auch mehrere Schutzbleche untereinander überlappend angebracht werden, insbesondere dann, wenn größere Höhenüberbrückungen der Überladebrücken erforderlich sind.

Die Größe der Fußschutzbleche (5), welche dreiecksförmig oder trapezförmig sein können, ist so bemessen, daß sie bei oberster Endstellung die seitliche Öffnung zwischen Rampenoberkante und Plattformunterkante abdecken. Dadurch werden beim Wiederabsenken der Plattform (3) Scher- und sonstige Gefahrenstellen vermieden. Somit entspricht die Höhe der einzelnen Fußschutzbleche (5) maximal der Höhe H der Grube und ihre Länge derjenigen des aus der Grube ragenden Teiles der Plattform (3).

Die Fußschutzbleche (5), welche vorzugsweise Stahlbleche sind, werden durch einen scherenartigen Hebelmechanismus ausgesteift, welcher wie folgt aufgebaut ist:

Jedes Fußschutzblech (5) ist einerseits im rampenseitigen Drittel an der Plattform (3) drehbar in der Axialverbindung (14) und andererseits im gegenüberliegenden Drittel der Plattform (3) im Widerlager (6), welches einen Anschlag (7) aufweist, befestigt. An diesem Widerlager (6) ist ein Arm (8) in Verbindung (11) drehbar angeordnet, der über Verbindung (12) drehbar mit einem weiteren Arm (9) scherenartig verbunden ist.

Arm (9) ist an seinem Endpunkt in Verbindung (13) drehbar mit dem Fußschutzblech (5) verbunden. Insgesamt liegt durch diese Anordnung ein scherenartiger Hebelmechanismus vor, wobei die Arme (8) und (9) einen Winkel α zwischen etwa 0 und 160° einnehmen können, je nach ihrer Länge bzw. der erforderlichen Höhenstellung der Brückenplattform (3).

Die Bewegung der Brückenplattform verläuft wie folgt:

Ist die Plattform (3) in horizontaler Ruhestellung, so liegt das Fußschutzblech (5) auf Widerlager (16) auf, welches Teil des unteren Rahmens der Überladebrücke bzw. des Grubenbodens sein kann. Die Oberkante des Fußschutzblechs schließt maximal mit der Höhe H der Grube bzw. Gehäusehöhe der Rampe ab oder liegt darunter, so daß sich das gesamte Fußschutzblech innerhalb des durch die Höhe H definierten Bereichs befindet. Die Plattform (3) stützt sich auf bekannte Weise mittels Stützen oder durch die Verlängerung am unteren Rahmen bzw. auf Wiederlager (15) der Überladebrücke ab.

Mittels geeigneter nicht beschriebener Vorrichtungen wird die Plattform (3) angehoben, wobei die beiden Arme (8) und (9) über Verbindung (14) auseinandergedreht werden und sich der Winkel $\alpha$ in Richtung Maximalstellung vergrößert. Diese Maximalstellung ist erreicht, bevor die Unterseite der Plattform (3) über das Rampenniveau hinauskommt und wird durch Drehung des Arms (8) gegen den in Höhe des Widerlagers (6) angeordneten Anschlag (7) bestimmt. Da die in Scherenstellung zueinander angeordneten Arme (8), (9) nicht weiter auseinanderrücken können, wird das ausgesteifte Fußschutzblech (5) bei weiterer Anhebung der Plattform (3) nun mit nach oben gehoben. Eine Krafteinwirkung aus seitlicher Richtung hat nunmehr keinen Einfluß, so daß Scher- und sonstige Gefahrenstellen ausgeräumt bleiben, wenn die Plattform (3) wieder abgesenkt wird, da die scherenförmige Hebelvorrichtung das Fußschutzblech (5) über den gesamten Hubbereich aussteift.

Nach dem Ausklappen bzw. Ausfahren der Verlängerung, welches ebenfalls mittels eines nicht dargestellten Antriebs erfolgen kann, senkt sich die Plattform (3) zusammen mit Fußschutzblech (5), bis letzteres auf Anschlag (16) am Boden der Rampe stößt und somit seine Ruheposition einnimmt. Die Plattform (3) wird weiter abgesenkt, da die Axialverbindung (14) eine Drehung der Plattform (3) gegenüber Fußschutzblech (5) zuläßt, wobei der Winkel $\alpha$ zwischen den Armen (8) und (9) seinen Minimalwert einnimmt, wenn die Plattform (3) sich in der tiefsten Stellung auf Widerlager (15) befindet.

Die scherenartig angeordneten Arme (8) und (9) sind vorzugsweise Flacheisen mit Rundlöchern und die Verbindungen (11), (12), (13) und (14) Schraub- oder Bolzenverbindungen. Ähnliche durable Materialien bzw. Verbindungsvorrichtungen können ebenfalls verwendet werden. Die Verbindung (13) kann vorzugsweise ein Füllstück (10) aufweisen. Die Länge der Arme (8) und (9) ist vorzugsweise so bemessen, daß das Fußschutzblech (5) ausreichend aussteifen kann, um sicheren Schutz gegen seitliches Eindrücken zu gewährleisten.

Falls größere Höhen überbrückt werden sollen, kann die erfindungsgemäße Überfahrbrücke auch mit 2 oder mehreren übereinander gelagerten Fußschutzblechen (5) ausgestattet werden, welche die entsprechenden scherenartigen Hebelmechanismen der beschriebenen Art aufweisen.

Bei langen Überladebrücken ist es ferner möglich, mehrere Aussteifungen, d.h. scherenartige Hebelmechanismen, bestehend aus Arm (8), (9) und den Verbindungen (6), (11), (12), (13) und (14), hintereinander anzuordnen, so daß eine größtmögliche Sicherheit des Fußschutzbleches (5) gewährleistet ist. Eine solche Anordnung ist auch insbesondere für solche Überladebrücken geeignet, die weit unter Niveau gebracht werden müssen.

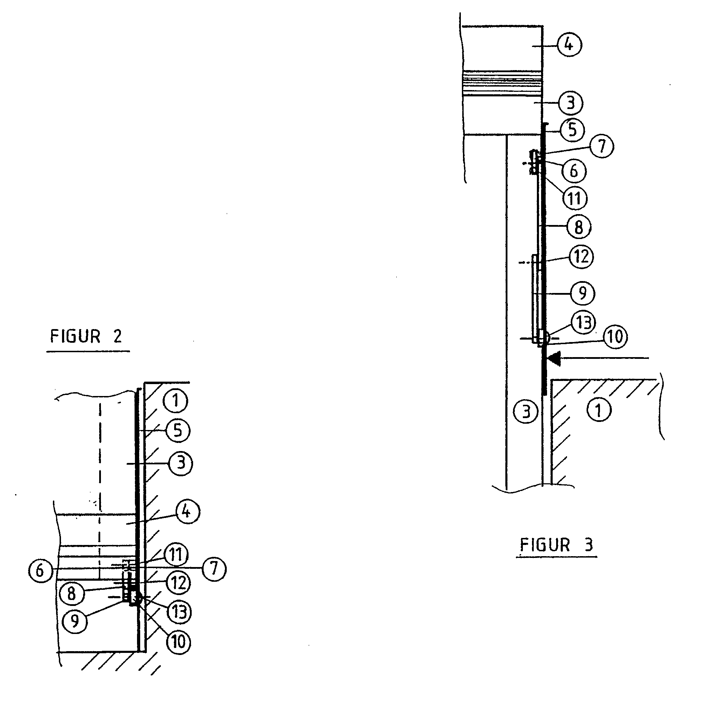

In den Fig. 2 und 3 ist nochmals in Voransicht der scherenförmige Hebelmechanismus der erfindungsgemäßen Überladebrücke aufgezeigt, wobei Fig. 2 die Ansicht im untersten Stand und Fig. 3 selbiges im Maximalstand der Überfahrbrücke zeigt. Diese zwei Figuren verdeutlichen die räumliche Anordnung des Scherenmechanismus.

Der Vorteil der erfindungsgemäßen Überladebrücke liegt darin, daß damit problemlos auch große Höhenunterschiede überbrückt werden können, wobei die Fußschutzbleche (5) über die gesamte Länge der Brücke wirken und auf einfache Weise aussteifbar sind, so daß der gesamte Arbeitsbereich der Brücke gesichert ist. Größere seitliche Kräfte können dadurch leicht aufgefangen werden. Die einfache Konstruktion ermöglicht es dabei, die Herstellungskosten niedrig zu halten.

## Patentansprüche

1. Überfahrbrücke für Rampen mit einer an ihrem rampenseitigen Ende um eine waagrechte Achse (2) verschwenkbaren Brückenplattform (3), die eine ein- und ausklappbare bzw. ein- und ausfahrbare Verlängerung (4) zum Auflegen auf die zu be- bzw. entladende Ladefläche aufweist, und mit seitlich angebrachten Fußschutzblechen (5) ausgestattet ist, dadurch gekennzeichnet, daß

1.1. die Höhe der einzelnen Fußschutzbleche (5) maximal der Bauhöhe H der Grube bzw. des Brückenrahmens und ihre Länge derjenigen des aus der Grube ragenden Teiles der Plattform (3) entspricht, wobei

1.2. jedes Fußschutzblech (5) einmal im rampenseitigen Teil an der Plattform (3) drehbar in Axialverbindung (14) befestigt ist und im gegenüberliegenden Teil an der Plattform (3) im Widerlager (6), welches einen Anschlag (7) für Arm (8) aufweist, befestigt ist, wobei ein Arm (8) mit Widerlager (6) in Verbindung (11) drehbar angeordnet ist und Arm (8) in Verbindung (12) mit einem zweiten Arm (9) drehbar angeordnet ist, wobei der Arm (9) in Verbindung (13) mit dem Fußschutzblech (5) drehbar angeordnet ist und zusammen mit dem Arm (8) scherenartig ungefähr einen Winkel $\alpha$ zwischen 0 und 160° beschreibt, und im tiefsten Stand von Plattform (3)

1.3. die Unterkante der Plattform (3) auf Widerlager (15) lagert, während Fußschutzblech (5) am Boden der Grube oder des Brückenrahmens im Lager (16) lagert, und der Winkel $\alpha$ etwa 0° beträgt.

2. Überfahrbrücke nach Anspruch 1, dadurch gekennzeichnet, daß das Fußschutzblech (5) ein Stahlblech ist.

3. Überfahrbrücke nach Anspruch 1 oder 2, dadurch gekennzeichnet, daß Arm (8) und Arm (9) Flacheisen mit Rundlöchern sind.

4. Überfahrbrücke nach einem der Ansprüche 1 bis 3, dadurch gekennzeichnet, daß die Verbindungen (11), (12), (13) und (14) Schraubverbindungen oder Bolzenverbindungen sind.

5. Überfahrbrücke nach einem der Ansprüche 1 bis 4, dadurch gekennzeichnet, daß die Verbindung (13) ein Füllstück (10) aufweist.

6. Überfahrbrücke nach einem der Ansprüche 1 bis 5, dadurch gekennzeichnet, daß sie jeweils zwei oder mehrere übereinander gelagerte Fußschutzbleche (5) mit jeweils zwei oder mehreren Armen (8) und (9), die jeweils in den Verbindungen (6), (11), (12), (13) und (14) miteinander verbunden bzw. an der Plattform (3) befestigt sind, aufweist.

7. Überfahrbrücke nach einem der Ansprüche 1 bis 5, dadurch gekennzeichnet, daß die Fußschutzbleche (5) jeweils zwei oder mehrere Aussteifungen, bestehend aus Arm (8), (9) und den jeweiligen Verbindungen (6), (11), (12), (13) und (14), aufweisen.

FIGUR 1

EP 0 459 002 A1

FIGUR 3

FIGUR 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 886 615 (METRO) <br> * Insgesamt * <br> --- | 1 | B 65 G 69/28 |
| A | US-A-4 110 860 (NEFF) <br> * Figuren 5-8 * <br> --- | 1 | |
| A | US-A-4 557 008 (JURDEN) <br> * Insgesamt * <br> --- | 1 | |
| A | DE-U-8 814 334 (VAN WIJK NEDERLAND B.V.) <br> * Insgesamt * <br> ----- | 1 | |

RECHERCHIERTE
SACHGEBIETE (Int. Cl.5)

B 65 G

Der vorliegende Recherchenbericht wurde für alle Patentansprüche erstellt

| Recherchenort | Abschlußdatum der Recherche | Prüfer |
|---|---|---|
| DEN HAAG | 29-01-1991 | OSTYN T.J.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)